# DEMANDE DE BREVET EUROPEEN

(11) **EP 2 987 623 A1**
(43) Date de publication de la demande: **24.02.2016**
(21) Numéro de dépôt: 15181251.8
(22) Date de dépôt: 17.08.2015
(51) Int. Cl.: B29C 51/16, B65D 65/46

(54) **PROCÉDÉ DE FABRICATION D'UN EMBALLAGE BIODÉGRADABLE ET COMPOSTABLE**

(30) Priorité: 18.08.2014 FR 1457854
(71) Demandeur: Cellulopack, 82100 Castelsarrasin (FR)
(72) Inventeur: Chomel, Jean-Yves, 31620 Fronton (FR); Mas, Olivier, 31590 Lavalette (FR)
(74) Mandataire: Regimbeau

(57) **Abrégé**

La présente invention concerne Procédé de fabrication d'un emballage alimentaire compostable comprenant les étapes suivantes :
a. fournir un emballage compostable en matériau perméable à l'air,
b. appliquer au-dessus de la surface supérieure de l'emballage, un film en polyester compostable présentant une température de fusion comprise entre 75 et 150°C, une contrainte de traction à rupture comprise entre 10 et 30 MPa et un allongement en traction à rupture compris entre 300 et 600%,
c. chauffer le film à une température comprise entre 80 et 150°C, et au moins égale à la température de fusion du film,
d. appliquer une aspiration par le dessous de l'emballage afin de thermosceller le film sur toute la surface supérieure du matériau,
e. refroidir l'ensemble afin d'obtenir un emballage comprenant un film soudé.

## Description

La présente invention concerne un procédé de fabrication d'un emballage pour produit alimentaire, de type barquette, étanche aux liquides et aux graisses et qui est entièrement biodégradable, compostable, scellable et supportant un passage au four.

Dans le domaine de l'emballage alimentaire, le produit à consommer est disposé à l'intérieur d'un récipient tel qu'une barquette par exemple. Le plus souvent, un tel récipient comprend au moins deux parois, à savoir une paroi externe associée à une paroi interne. La paroi externe est en général rigide et peut comprendre des impressions. La paroi interne est généralement sous la forme d'un film permettant de protéger la paroi externe.

Face aux contraintes environnementales de plus en plus strictes, les questions de recyclages des emballages alimentaires sont au centre des préoccupations des fabricants mais aussi des utilisateurs de ces emballages.

Ainsi les emballages, alimentaires ou non alimentaires, se doivent d'être recyclables après utilisation. Dans le cas des emballages alimentaires, ceux-ci sont souillés par des résidus et leur réutilisation n'est pas possible ainsi leur devenir passe le plus souvent par un recyclage. Le recyclage de contenants alimentaires souillés, au sens de réutilisation pour la fabrication de nouveau contenant est difficilement envisageable et l'issue de ce type d'emballage est la destruction pure et simple ou le recyclage par compostage.

Cependant encore, la présence de films plastiques non biodégradables et/ou non compostables au sein de tels emballages ne permet pas de les orienter vers le compostage.

Pour répondre aux spécifications de la règlementation sur les emballages, et pour résoudre la difficulté qu'il y a à recycler des emballages conçus avec deux ou plusieurs matériaux (carton et film par exemple), et en particulier les emballages alimentaires souillés, diverses solutions ont pu être développées selon la nature des matériaux entrant dans la composition des emballages.

Le compostage est un procédé qui consiste à placer des produits fermentescibles dans des conditions (températures, humidité, oxygénation, présence de micro-organismes du sol etc.) permettant leur biodégradation

Or la biodégradation c'est la décomposition d'un matériau organique par des micro-organismes : bactéries, champignons, animaux, unicellulaires.

Il faut savoir qu'il existe une norme pour les emballages valorisables : la norme NF 13432. Cette norme définit les caractéristiques qu'un matériau, un produit, doit posséder pour être considéré comme compostable et biodégradable.

Les emballages répondant à cette norme peuvent donc être valorisés par compostage au même titre que des déchets organiques. La définition des critères de compostabilité est très importante car les matériaux non compatibles avec le compostage (plastiques traditionnels, verre, matériaux contaminés par des métaux lourds, etc.) peuvent affecter la qualité finale du compost et le rendre, de ce fait, inapte pour une utilisation agricole. Il serait alors inacceptable d'un point de vue environnemental et commercial.

Un matériau biodégradable n'est pas nécessairement compostable car il doit également se désintégrer pendant un cycle de compostage d'une durée de 3 mois.

Par ailleurs, un matériau qui se fragmenterait pendant le cycle de compostage en de multiples particules inférieures à 2 mm sans que celles-ci soient elles-mêmes biodégradables, ne serait pas considéré comme compostable. Les emballages à base de cellulose ou de matériau cellulosique tel que papier, carton ou pâte de cellulose par exemple, sont aisément biodégradables et compostables cependant ils ne présentent pas les qualités nécessaires pour le contact direct avec des aliments, liquides ou solides, chauds ou froids.

Certaines solutions ont été développées et consistent à coller un film plastique sur la paroi cartonnée en contact avec les aliments. Cependant, comme indiqué plus avant, la présence d'un tel film plastique est un obstacle à la biodégradabilité et au compostage.

D'autres alternatives consistent à fournir un emballage dans lequel le film plastique est délaminable et pelable ce qui permet de jeter ledit film et de procéder au compostage du matériau d'emballage externe. Une telle étape de séparation du film complexifie le retraitement de l'emballage.

FR2892244 décrit une barquette alimentaire constituée d'une cuvette en carton revêtue d'un film plastique biodégradable. Une telle barquette est produite par emboutissage d'un colaminé constitué d'une feuille de carton sur laquelle est collé le film plastique biodégradable. L'emboutissage entraîne la formation de plis tant au niveau des concavités de la barquette qu'au niveau des convexités du rebord de cette barquette. Ces plis rendent difficile l'operculage et entrainent des risque de fuites.

WO2007/062265 décrit un procédé de filmage d'un emballage biodégradable par chauffage de l'emballage à une température de fusion d'un film biodégradable, chauffage dudit film biodégradable, et application dudit film sur l'emballage. L'emballage est ici chauffé à une température de 70°C à 200°C et est constitué d'un matériau en amidon gélatinisé non poreux. Ce document divulgue que l'application du film est réalisée via l'application d'un adhésif entre l'emballage et le film, par trempage ou pulvérisation du film liquide. Une application par le vide est évoquée. Cependant il s'agit d'une application de vide suite à l'enveloppement entier par le film autour de l'emballage et non pas en surface. Un autre mode d'application par le vide est évoqué où il est indiqué que l'emballage est disposé dans un « nid » (a nest) d'un appareil de mise sous vide de type cloche conformant les contours de l'emballage, nid équipé de trous pour tirer le vide au sein d'un tel appareil de type cloche à vide. Dans ce cas, l'air est aspiré via les trous disposés au niveau du nid et s'évacue par les bords latéraux.

EP 2 141 191 divulgue un procédé de fabrication d'un emballage composite par « coating » d'un film de cellulose par application d'un revêtement en phase liquide (solvant ou eau) suivi d'un second revêtement par extrusion d'une couche additionnelle.

EP 1 787 807 décrit un feuillet à base de matière végétale co-laminé avec un second feuillet à base d'acide glycolique.

US 5 736 204 décrit le traitement d'un support cartonné plat par traitement à la flamme suivi d'un revêtement avec un film.

Ces technologies impliquent le formage par emboutissage après l'application du film ce qui pose le problème des plis évoqués ci avant.

Il existe ainsi un besoin en un procédé simple, rapide et économique pour la fabrication d'un emballage apte au contact alimentaire, qui soit étanche aux huiles et à l'eau, qui soit résistant aux températures mises en oeuvre lors du chauffage ou réchauffage des aliments contenus, qui soit operculable de manière fiable et étanche et bien sûr entièrement biodégradable et compostable.

C'est ainsi que la présente invention concerne un procédé de fabrication d'un emballage alimentaire compostable comprenant les étapes suivantes :
a. fournir un emballage compostable en matériau perméable à l'air,
b. appliquer au-dessus de la surface supérieure de l'emballage, un film compostable, préférentiellement en polyester compostable,présentant une température de fusion comprise entre 75 et 150°C, une contrainte de traction à rupture comprise entre 10 et 30 MPa et un allongement en traction à rupture compris entre 300 et 600%,
c. chauffer le film à une température comprise entre 80 et 150°C, et au moins égale à la température de fusion du film,
d. appliquer une aspiration par le dessous de l'emballage afin de thermosceller le film sur toute la surface supérieure du matériau,
e. refroidir l'ensemble afin d'obtenir un emballage comprenant un film soudé.

Dans une forme particulière de réalisation du procédé selon l'invention l'emballage compostable en matériau perméable à l'air est en fibres végétales parmi lesquelles on peut citer la cellulose, la cellulose compressée, la cellulose moulée ou tout matériau similaire qui présente une perméabilité à l'air. De manière préférentielle, l'emballage compostable en matériau perméable à l'air est en cellulose compressée.

La propriété de perméabilité à l'air permet lors de l'étape d) d'aspiration par le dessous de l'emballage de créer une dépression entre la paroi supérieure de l'emballage et le film appliqué et de plaquer ledit film pour assurer un thermoscellage efficace dudit film.

Dans le cadre de la présente demande l'expression « perméable à l'air » signifie que le matériau de l'emballage est poreux et laisse facilement passer l'air sans qu'une pression extrême soit nécessaire. Ainsi l'expression « perméable à l'air » peut être remplacée ^par « poreux ». La mesure de la perméabilité à l'air, ou de la porosité du matériau de l'emballage compostable peut être mesurée selon la méthode de porosimétrie Gurley, on parlera ainsi de porosité Gurley. Cette méthode est utilisée pour la détermination de la perméabilité à l'air de cartons par exemple et se prête particulièrement bien à la mesure de la perméabilité des emballages selon la présente invention. La méthode est particulièrement décrite par la norme ISO 5636/5 et peut être mise en oeuvre par un densimètre ou porosimètre Gurley tel que par exemple le porosimètre Gurley 4110+4320 T6818 commercialisé par la société TEchlabsystems. L'essai consiste à mesurer le temps nécessaire à un volume d'air donné pour passer à travers une surface déterminée d'un matériau lorsque qu'il est soumis à une faible pression uniforme. La pression est exercée par un poids de poids normalisé coulissant librement par gravité à l'intérieur d'un cylindre. L'échantillon de matériau à mesurer est maintenu entre deux anneaux de serrage ayant un orifice circulaire de 6.45 cm2 (standard) ou autres surface. La porosité Gurley est exprimé en seconde.

Ainsi, dans le cadre de la présente invention, la porosité, ou perméabilité à l'air, ou porosité Gurley du matériau d'emballage compostable selon la présente invention peut être mesurée selon la méthode normée ISO 5636/5 à l'aide d'un porosimètre Gurley Techlabsystems évoqué supra équipé d'un poids de 567 g env et ayant un orifice circulaire de 6.45 cm2.

Dans ces conditions, et pour un volume d'air de 250 ml, la porosité ou perméabilité à l'air ou porosité Gurley, du matériau d'emballage compostable mis en oeuvre dans le procédé selon l'invention est comprise entre 3 et 150 secondes, particulièrement entre 3 et 100 secondes, plus particulièrement entre 3 et 75 secondes, plus particulièrement encore entre 3 et 60 secondes, plus particulièrement entre 3 et 45 secondes, plus particulièrement entre 3 et 30 secondes, plus particulièrement entre 3 et 20 secondes, plus particulièrement entre 3 et 15 secondes.

Dans un mode de réalisation particulier du procédé selon la présente invention, l'emballage compostable en matériau perméable à l'air est caractérisé par une porosité comprise entre 3 et 150 secondes, particulièrement entre 3 et 100 secondes, plus particulièrement entre 3 et 75 secondes, plus particulièrement encore entre 3 et 60 secondes, plus particulièrement entre 3 et 45 secondes, plus particulièrement entre 3 et 30 secondes, plus particulièrement entre 3 et 20 secondes, plus particulièrement entre 3 et 15 secondes, telle que mesurée par la méthode Gurley présentée ci avant et ce pour un volume d'air de 250 ml.

Dans une forme de réalisation particulière du procédé selon l'invention, l'emballage compostable en matériau perméable à l'air est en cellulose moulée et/ou compressée est un emballage de type barquette munie d'un fond, de parois latérales et éventuellement d'un rebord destiné au scellage d'un éventuel opercule.

Des barquettes en cellulose moulée et/ou compressée sont bien connues de l'homme du métier et elles peuvent être soit fabriquées par des techniques connues soit achetées dans le commerce. Typiquement, la fabrication de telles barquettes débute par la fourniture de substrat cellulosique qui peut être du papier, neuf ou usagé, ou tout autre source de cellulose. Ce substrat est déposé à l'intérieur du pulpeur où il est mélangé à de l'eau par un système mécanique. Une hélice assure l'homogénéité du mélange eau/fibres de cellulose.

Une fois la pâte préparée, un moule recouvert d'un fin treillis métallique est trempé dans la pâte. Le mélange d'eau et de fibres est alors aspiré rapidement à travers le moule. Les fibres sont arrêtées par le treillis, se déposent et s'accumulent jusqu'à former la forme voulue, selon le moule utilisé. L'eau quant à elle, traverse le treillis et est immédiatement recyclée ou éliminée.

Les produits sont ensuite séchés, soit par séchage au four, soit via un séchage en moules mâles et femelles en surpression. Le produit est déposé entre les deux moules qui se referment sous l'action d'une presse. Les produits sont ainsi séchés par un traitement mêlant chaleur et pression. Les produits ainsi obtenus par séchage en moule sous presse présentent l'avantage d'avoir des parois bien planes et régulières ce qui est avantageux tant esthétiquement que pour la bonne adhérence et le thermo scellage du film.

Les emballages compostables, tels que les barquettes en cellulose compressée, peuvent être disposés sur un convoyeur, tel une platine support comprenant des alvéoles dans lesquelles sont disposées les barquettes, afin de procéder à l'étape suivante du procédé selon l'invention.

Dans la seconde étape du procédé selon l'invention on applique, au-dessus de la surface supérieure de l'emballage, un film compostable, préférentiellement en polyester compostable,présentant une température de fusion comprise entre 75 et 150°C, une contrainte de traction à rupture comprise entre 18 et 30 MPa et un allongement en traction à rupture compris entre 300 et 600%.

La température de fusion de ce film compostable, préférentiellement en polyester compostable, est ainsi comprise entre 75 et 150°C, plus particulièrement entre 80 et 140° et plus particulièrement encore entre 85 et 130°C, plus particulièrement encore aux environs de 120°C.

Le choix de la température de fusion pourra être fonction du dispositif de mise en oeuvre du procédé mais aussi de l'application de l'emballage obtenu. En particulier si l'emballage, en particulier une barquette alimentaire, est destiné à contenir un produit alimentaire chaud ou destiné à être chauffé, il conviendra de choisir un film compostable, préférentiellement en polyester compostable, dont la température de fusion est adaptée à la température des aliments. Typiquement, une température de fusion entre 85°C et 140°C est la plus appropriée à la plupart des applications alimentaires envisagées dans le cadre de la présente invention. En effet, cette température est aussi compatible avec le matériau de l'emballage et dans le cas particulier de la mise en oeuvre d'une barquette en cellulose compressée en tant que matériau d'emballage compostable perméable à l'air, la température de fusion, correspondant à la température de chauffage du film, il conviendra que cette température soit compatible avec un tel matériau.
Dans un mode de réalisation de l'invention, le film compostable, préférentiellement en polyester compostable, présente une contrainte de traction à rupture comprise entre 10 et 30 MPa, particulièrement entre 15 et 25 MPa ; plus particulièrement entre 20 et 25 MPa. Ce film compostable en polyester présente ainsi un allongement en traction à rupture compris entre 300 et 600%, plus particulièrement compris entre 300 et 500%, plus particulièrement entre 350 et 400 %, et plus particulièrement encore aux environs de 350 %.

Ces caractéristiques de contrainte à la rupture et d'allongement associées à la température de fusion du film compostable, préférentiellement en polyester compostable, permettent que le film épouse tous les reliefs concaves et convexes du matériau d'emballage compostable sur la surface supérieure duquel il est appliqué et ce via l'aspiration créée au niveau de la surface inférieure du matériau d'emballage qui est perméable à l'air.

Le film compostable, préférentiellement en polyester compostable, est ainsi ramolli par le chauffage à une température au moins égale à sa température de fusion et est ensuite plaqué, via l'aspiration créée à travers le matériau perméable à l'air, sur toute la surface. Ce plaquage du film chauffé permet d'assurer un thermoscellage ou thermosoudage dudit film avec le matériau d'emballage perméable à l'air. La fusion partielle du matériau du film compostable, préférentiellement en polyester compostable, permet ainsi un thermoscellage ou thermosoudage du film avec le matériau d'emballage, en particulier une barquette en cellulose compressée. Après refroidissement, le film compostable, préférentiellement en polyester compostable, est ainsi scellé au matériau d'emballage compostable et en épouse toutes les formes et reliefs tout en créant une barrière aux liquides tant aqueux que gras.

Le fait d'utiliser un matériau tel que la cellulose moulée et/compressée permet un placage et une imprégnation profonde du film polyester chauffé. En effet, les barquettes en cellulose moulée et/ou compressée présentent une porosité à l'air particulièrement élevée -telle qu'évoquée plus avant - qui permet un « tirage » facile de l'air à travers celles-ci afin de pouvoir plaquer facilement et rapidement film compostable, préférentiellement en polyester compostable, et ce sans devoir utiliser des appareils de type cloche à vide qui sont complexes, onéreux et rendent difficile, voire impossible, une production en semi-continu alors que le présente procédé le permet.

En outre, la porosité du matériau de l'emballage, en particulier la cellulose moulée, permet lors de l'étape d'application du vide, une imprégnation partielle dudit matériau avec le film compostable, préférentiellement en polyester compostable, ce qui assure une interpénétration et un contact intime des deux matériaux et empêche tout phénomène de délamination.

Dans le cas du présent procédé, le matériau de l'emballage est perméable à l'air, c'est-à-dire poreux, ce qui n'est pas le cas - ou pas à des niveaux équivalents - des matériaux de l'art antérieur, par exemple en amidon prégélatinisé ou polymère. D'autre part, l'application du vide est faite par le dessous en assurant l'imperméabilité au niveau des bords de l'emballage ce qui permet, grâce à la porosité du matériau d'emballage, un effet de succion sur toute la surface de l'emballage en contact avec le film polyester chauffé.

En effet, le film compostable, préférentiellement en polyester compostable,est imperméable à l'eau et aux huiles et évite ainsi que le matériau d'emballage compostable perméable à l'air soit imbibé d'eau ou de graisse et perde toute structure et/ou rigidité. La perméabilité dudit film compostable, préférentiellement en polyester compostable, pourra être choisie en fonction de l'application envisagée et pourra être telle que le film empêche la migration d'eau et de matières grasses lorsque l'emballage contient un aliment et est soumis à une étape de chauffage ou réchauffage à une température comprise entre 90 et 140°C pendant une durée de l'ordre de 20 à 90 minutes, particulièrement pendant 30 à 60 minutes, plus particulièrement pendant environ 45 minutes. Le réchauffage typique de barquettes contenant une préparation alimentaire est effectué typiquement aux environs de 130 à 140°c pendant 30 à 45 minutes. Il conviendra dès lors que pendant un tel laps de temps, le film joue le rôle de barrière à l'eau et aux graisses afin d'éviter que le matériau, en particulier de la cellulose compressée, ne se ramollisse, perde sa rigidité ou présente des fuites de liquides. L'homme du métier pourra ainsi aisément choisir le film compostable, préférentiellement en polyester compostable, adapté à l'application envisagée et permettant de protéger de l'imprégnation d'eau et/ou de graisses le matériau perméable à l'air de l'emballage compostable sur lequel est thermosoudé ledit film compostable, préférentiellement en polyester compostable,.

L'épaisseur du film compostable, préférentiellement en polyester compostable, sera fonction de la nature du film, de ses propriétés mécanique de résistance ou d'élongation à la rupture ainsi que de l'application envisagée. Typiquement l'épaisseur du film compostable, préférentiellement en polyester compostable, sera comprise entre 30 et 120 µm, particulièrement entre 40 et 100 µm, plus particulièrement encore entre 50 et 80 µm, et plus particulièrement encore aux environs de 60 µm par exemple.

L'épaisseur dudit film compostable, préférentiellement en polyester compostable, est de nature à influer sur la compostabilité dudit film et plus cette épaisseur est faible, plus la compostabilité est aisée. Typiquement, une épaisseur comprise jusqu'à 120 µm permet un compostage.

La notion de compostable s'entend dans le cadre de la présente invention selon la norme NF NE 13432:2000 qui donne les exigences relatives aux emballages valorisables par compostage et biodégradation. La norme NF NE 13432 a été acceptée par décision de la commission (2001/524/CE) et publiée au journal officiel des communautés européennes. Elle est une référence en Europe dans le domaine. Elle définit le compostage comme suit : sous l'action de micro-organismes en présence d'oxygène, décomposition d'un composé chimique organique en dioxyde de carbone, eau et sels minéraux, des autres éléments présents (minéralisation) et apparition d'une nouvelle biomasse ; en l'absence d'oxygène, décomposition en dioxyde de carbone, méthane, sels minéraux et création d'une nouvelle biomasse.

Afin de qualifier un matériau d'emballage compostable, la norme EN 13432:2000 prévoit la réalisation de tests dans un composteur industriel (en andain ou en tas) sur une période test de 12 semaines maximum.

En ce qui concerne les résultats physiques et effets sur le compost : les résidus doivent représenter au maximum 10% de la masse de départ du matériau testé, la taille des résidus doit être inférieure à 2 mm (désintégration), l'absence d'effets négatifs sur le processus de compostage et le résultat du compostage ne doit pas présenter d'effets écotoxiques sur le compost. Les tests de compostabilité sont réalisés par comparaison avec un compost témoin.
Dans un mode de réalisation particulier, la présente invention concerne une procédé tel que décrit précédemment dans lequel le film est en polyester compostable et est choisi parmi les polyesters aliphatiques compostables et biodégradables.
De manière avantageuse, ledit film compostable, particulièrement en polyester compostable,est choisi dans le groupe comprenant, ou consistant en , un polyester aliphatique obtenu par polycondensation de 1,4 butanediol et d'acide succinique, un polyester aliphatique obtenu par polycondensation de 1,2-ethanediol et 1,4-butanediol avec l'acide succinique et l'acide adipique et un polyester aliphatique obtenu par polycondensation d'acide butanedioique et 1,4-butanediol avec l'acide 2-hydroxypropanoique.

Le film compostable, préférentiellement en polyester compostable, mis en oeuvre dans le procédé selon la présente invention peut ainsi être choisi parmi les polyesters aliphatiques compostables et biodégradables. Il existe de nombreux polyesters aliphatiques, en ce inclus les copolyesters aliphatiques, et ceux-ci sont obtenus par la combinaison de diols tels que par exemple le 1,2-ethanediol, le 1,3-propanediol ou le 1,4-butanediol et d'acides dicarboxyliques tels que l'acide adipique, l'acide sebacique ou l'acide succinique par exemple. Ainsi, par exemple Showa Highpolymer (Japon) ont développé une large gamme de polyesters aliphatiques que sont les polybutylene succinate via polycondensation de 1,4 butanediol et d'acide succinique. Un autre polyester aliphatique peut être obtenu par polycondensation de 1,2-ethanediol, 1,4-butanediol avec acide succinique et acide adipique (SK Chemicals). On peut citer aussi le polyester aliphatique obtenu par polycondensation d'acide butanedioique, 1,4-butanediol et d'acide 2-hydroxypropanoique.

Ainsi le film compostable selon la présente invention pourra être un film polyester compostable et pourra être choisi dans le groupe comprenant, ou consistant en, un polyester aliphatique obtenu par polycondensation de 1,4 butanediol et d'acide succinique, un polyester aliphatique obtenu par polycondensation de 1,2-ethanediol et 1,4-butanediol avec l'acide succinique et l'acide adipique et un polyester aliphatique obtenu par polycondensation d'acide butanedioique et 1,4-butanediol avec l'acide 2-hydroxypropanoique.

De manière particulière encore le polyester aliphatique compostable du film utilisable dans le procédé selon la présente invention pourra être un polyester aliphatique obtenu par polycondensation d'acide butanedioique et 1,4-butanediol avec l'acide 2-hydroxypropanoique.

Le film compostable, préférentiellement en polyester compostable, convenable selon l'invention est ainsi disposé sur le dessus de l'emballage en matériau compostable perméable à l'air, plus particulièrement une barquette en cellulose compressée par exemple, et ledit film est chauffé de manière à atteindre la température de fusion du matériau du film.

Alternativement et de manière tout à fait équivalente, le film peut être chauffé avant d'être disposé sur le dessus de l'emballage en matériau compostable perméable à l'air.

Le chauffage du film peut être réalisé par tout moyen conventionnel connu de l'homme du métier tel que par exemple une rampe infrarouge.

La dernière étape du procédé selon l'invention comprend une aspiration opérée par le dessous de l'emballage en matériau compostable perméable à l'air. Le fait que le matériau, par exemple une barquette en cellulose compressée, soit perméable à l'air permet, via l'application d'une aspiration ou dépression au niveau de la surface inférieure du matériau en question, de créer aisément et uniformément une dépression entre le matériau et le film qui est ainsi plaqué ce qui assure un thermoscellage profond dudit film sur la surface supérieure de l'emballage en matériau compostable perméable à l'air.

L'aspiration par le dessous peut être appliquée par tout moyen approprié et il est dans les compétences de l'homme du métier d'adapter une chaine de pelliculage à cette fin.

De manière alternative, l'ensemble emballage en matériau compostable perméable à l'air et un film compostable, préférentiellement en polyester compostable, est chauffé préalablement à l'application de l'aspiration par le dessous de l'emballage.

Typiquement dans les grandes étapes du procédé selon l'invention, des barquettes en cellulose compressée sont disposées dans des alvéoles d'une platine support, la face concave vers le haut. Le film compostable, préférentiellement en polyester compostable, est chauffé puis appliqué au niveau de la face supérieure concave des barquettes en cellulose. De manière avantageuse, la barquette peut aussi être chauffée, et via une aspiration le film est thermoscellé au matériau de la barquette. Le film fusionne ainsi avec le matériau et épouse parfaitement tout le profil de ladite barquette. On procède ensuite à une découpe de la bande de film entre les barquettes afin de les désolidariser et de pouvoir les stocker.

Les emballages ainsi obtenus par le procédé selon l'invention présentent l'avantage d'être totalement et intégralement biodégradables et compostables. Grâce au choix du film compostable, en particulier en polyester compostable, plus particulièrement encore en polyester aliphatique compostable, imperméable à l'eau et aux graisses ; les emballages ainsi obtenus peuvent servir de contenant pour des produits alimentaires liquides, solides, pâteux et ce tant chauds que froids.

En outre grâce au procédé selon l'invention permettant un thermoscellage parfait du film sur toute la surface de l'emballage sur laquelle le film est appliqué et thermoscellé, on ne constate aucun plis. Un emballage selon la présente invention comprend ainsi un fond, des parois latérales et un rebord périphérique qui sont dénués de plis ou aspérités.

Ainsi, on pourra aisément et sûrement operculer un emballage, en particulier une barquette obtenue selon l'invention grâce au thermoscellage d'un opercule au niveau du rebord périphérique parfaitement plat et dénué de plis d'emboutissage comme cela est le cas avec des barquettes de l'art antérieur. Un film de scellage pourra ainsi être appliqué sur le dessus et thermo scellé au niveau de la lèvre du rebord périphérique.

La présente invention concerne ainsi un emballage susceptible d'être obtenu par le procédé selon l'invention. De manière avantageuse cet emballage est une barquette en cellulose compressée revêtue d'un film compostable, préférentiellement en polyester compostable, tel que décrit plus avant. Une telle barquette est entièrement biodégradable et compostable et ce au sens de la norme mentionnée plus avant dans la présente description.

Une barquette selon la présente invention est particulièrement adaptée à la restauration collective. En général, la restauration collective, telle que les cantines scolaires ou d'hôpital ou les sociétés privées de restauration collective font appel à des cuisines extérieures pour servir des repas collectifs en portions. Dans ces cuisines: les plats sont préparés, transportés et servis dans des barquettes operculées à usage unique. 70% des barquettes sont en plastique, 25% en aluminium et 5% sont fabriqués à partir d'autres matériaux. Ces barquettes alimentaires génèrent un volume considérable de déchets souillés, non recyclables autrement qu'en incinération dont seules les collectivités subissent le coût. De plus, l'évolution de la société va vers une prise de conscience des déchets produits par son activité, il en est de même pour la restauration collective hors foyer qui subit de très fortes pressions de la part des collectivités locales afin que celle-ci règle le problème des déchets.

Les emballages selon la présente invention sont particulièrement adaptés à l'utilisation en restauration collective. Ainsi, l'emballage selon la présente invention présente une compatibilité alimentaire ainsi qu'une imperméabilité à l'eau et aux graisses, compatible avec les durées de conservation et les températures mise en oeuvre lors des liaisons chaudes et froides de la restauration collective. En effet, les plats ainsi préparés et conditionnés dans de tels emballages ne sont pas conservés plus de quelques heures ce qui est compatible avec la perméabilité à l'eau et aux graisses du film en polyester revêtant l'emballage en matériau perméable à l'air, en particulier une barquette en cellulose compressée.

La présente invention concerne ainsi l'utilisation d'un emballage, en particulier une barquette, obtenu selon un procédé selon la présente invention pour la liaison chaude ou la liaison froide en restauration collective.

En effet, l'emballage selon l'invention, une fois rempli d'une composition alimentaire résiste sans ramollissement ni fuite à un réchauffage à une température allant jusqu'à 140 °C et ce pendant au moins 40 minutes.

C'est aussi un objet de la présente invention que de fournir un emballage selon la présente invention comprenant un fond, des parois latérales et un rebord périphérique, contenant un produit alimentaire et operculé par un film compostable, préférentiellement en polyester compostable, protecteur thermoscellé au niveau du rebord périphérique.

On entend par liaison chaude une méthode de conservation d'un produit alimentaire entre sa fabrication et sa consommation consistant à le garder à une température supérieure à 63 degrés. Cette solution est employée notamment dans la restauration entre le lieu de production et le lieu de consommation et le produit alimentaire est conservé ainsi quelques heures.

On entend par liaison froide une méthode de conservation des aliments selon laquelle les produits alimentaires sont préparés en cuisine centrale et, après cuisson, sont soumis à une réfrigération rapide avant d'être stockées à basse température. Suivant la durée de conservation recherchée (quelques jours ou quelques mois), on procède à une liaison froide positive ou une liaison froide négative.

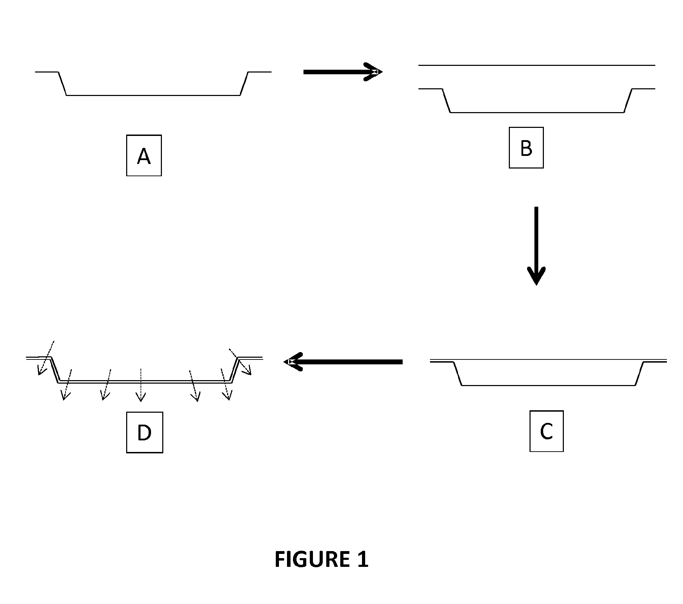

La Figure 1 illustre le procédé de fabrication d'un emballage selon la présente invention. A l'étape A, une barquette en cellulose compressée munie d'un fond, de parois latérales et d'un rebord périphérique est fournie. Cette barquette présente une porosité Gurley telle qu'indiquée ci-avant comprise entre 5 secondes et 150 secondes. Dans l'étape B, on dispose un film en polyester aliphatique compostable (polyester aliphatique obtenu par polycondensation d'acide butanedioique et 1,4-butanediol avec l'acide 2-hydroxypropanoique d'épaisseur 50 µm) sur la face supérieure de la barquette. Le film est chauffé à une température au moins égale à sa température de fusion, à savoir 125°C, étape C. Enfin, lors de l'étape D, un vide est appliqué (flèches en pointillé) par le dessous de la barquette afin de plaquer par dépression le film sur toute la surface supérieure de la barquette et l'ensemble est ensuite refroidi afin d'obtenir une barquette en cellulose compressée revêtue d'un film thermoscellé en polyester aliphatique. L'ensemble est compatible avec des produits alimentaires, apte au réchauffage de ceux-ci avant livraison et consommation et enfin compostable et biodégradable après utilisation.

## Revendications

1. Procédé de fabrication d'un emballage alimentaire compostable comprenant les étapes suivantes :
a) fournir un emballage compostable en matériau perméable à l'air,
b) appliquer au-dessus de la surface supérieure de l'emballage, un film compostable, préférentiellement en polyester compostable, présentant une température de fusion comprise entre 75 et 150°C, une contrainte de traction à rupture comprise entre 10 et 30 MPa et un allongement en traction à rupture compris entre 300 et 600%,
c) chauffer le film à une température comprise entre 80 et 150°C, et au moins égale à la température de fusion du film,
d) appliquer une aspiration par le dessous de l'emballage afin de thermosceller le film sur toute la surface supérieure du matériau,
e) refroidir l'ensemble afin d'obtenir un emballage comprenant un film soudé.

2. Procédé selon la revendication 1 dans lequel l'emballage compostable en matériau perméable à l'air est en cellulose compressée.

3. Procédé selon la revendication 2 dans lequel l'emballage compostable en matériau perméable est de type barquette munie d'un fond, de parois latérales et éventuellement d'un rebord destiné au scellage d'un éventuel opercule.

4. Procédé selon l'une des revendications 1 à 3 dans lequel la température de fusion du film est comprise entre 75 et 150°C, plus particulièrement entre 80 et 140°, plus particulièrement encore entre 85 et 130°C , plus particulièrement encore aux environs de 120°C.

5. Procédé selon l'une des revendications 1 à 4 dans lequel le film présente une contrainte de traction à rupture comprise entre 10 et 30 MPa, particulièrement entre 15 et 25 MPa ; plus particulièrement entre 20 et 25 MPa.

6. Procédé selon l'une des revendications 1 à 5 dans lequel le film présente ainsi un allongement en traction à rupture compris entre 300 et 600%, plus particulièrement compris entre 300 et 500%, plus particulièrement entre 350 et 400 %, et plus particulièrement encore aux environs de 350 %.

7. Procédé selon l'une des revendications 1 à 6 dans lequel le film est imperméable à l'eau et aux huiles.

8. Procédé selon l'une des revendications 1 à 7 dans lequel l'épaisseur du film sera comprise entre 30 et 120 µm, particulièrement entre 40 et 100 µm, plus particulièrement encore entre 50 et 80 µm, et plus particulièrement encore aux environs de 60 µm par exemple.

9. Procédé selon l'une des revendications 1 à 8 dans lequel le film est en polyester compostable et est choisi parmi les polyesters aliphatiques compostables et biodégradables.

10. Procédé selon l'une des revendications 1 à 9 dans lequel le film est choisi dans le groupe comprenant un polyester aliphatique obtenu par polycondensation de 1,4 butanediol et d'acide succinique, un polyester aliphatique obtenu par polycondensation de 1,2-ethanediol et 1,4-butanediol avec l'acide succinique et l'acide adipique et un polyester aliphatique obtenu par polycondensation d'acide butanedioique et 1,4-butanediol avec l'acide 2-hydroxypropanoique.

11. Emballage susceptible d'être obtenu par un procédé selon l'une des revendications précédentes.

12. Emballage selon la revendication 11 comprenant un fond, des parois latérales et un rebord périphérique, contenant un produit alimentaire et operculé par un film protecteur thermoscellé au niveau du rebord périphérique.

13. Utilisation d'un emballage selon la revendication 11, pour la liaison chaude ou la liaison froide en restauration collective.
